# EUROPEAN PATENT APPLICATION

(11) **EP 4 796 359 A1**
(43) Date of publication of application: **26.08.2026**
(21) Application number: 24878780.6
(22) Date of filing: 20.09.2024
(51) Int. Cl.: B60K 7/00, B62D 15/02, B62D 9/00, B62D 33/08

(54) **DRIVING MODULE OF TRANSPORT VEHICLE AND TRANSPORT VEHICLE**

(30) Priority: 17.10.2023 CN 202311345382
(71) Applicant: Hangzhou Hikrobot Co., Ltd., Hangzhou, Zhejiang 310051 (CN)
(72) Inventor: WANG, Xulong, Hangzhou, Zhejiang 310051 (CN); GUO, Kaiwen, Hangzhou, Zhejiang 310051 (CN); CHEN, Wen, Hangzhou, Zhejiang 310051 (CN); HE, Liheng, Hangzhou, Zhejiang 310051 (CN)
(74) Representative: Schmitz, Joseph
(86) International application number: PCT/CN2024/119947
(87) International publication number: WO 2025/082132

(57) **Abstract**

A driving module of a transport vehicle and a transport vehicle. The driving module ( 10) comprises: a driving assembly (100), wherein the driving assembly (100) comprises motors (110), driving wheels (120), and a frame (130), the motors (110) are transmittingly connected to the driving wheels (120), and are located in the frame (130) and fixedly connected to the frame (130), and the driving wheels (120) are located outside the frame (130); a support (200) comprising a horizontal plate (210), wherein the horizontal plate (210) is mounted on the top of the frame (130); a slewing bearing (300) mounted on the top of the horizontal plate (210) and comprising a bearing inner ring (310) and a bearing outer ring (320), wherein one of the bearing inner ring (310) and the bearing outer ring (320) is connected to the horizontal plate (210), and the other one is configured to be connected to a bearing plate (20) of the transport vehicle; and a non-contact angle sensor assembly (400) comprising an annular bevel protractor ( 410) and reader (420), wherein the annular bevel protractor (410) is fixed on the bearing inner ring (310) so as to be connected to the horizontal plate (210), and the reader (420) is fixed on the bearing outer ring (320), or the annular bevel protractor ( 410) is fixed on the bearing outer ring (320) so as to be connected to the horizontal plate (210), and the reader (420) is fixed on the bearing inner ring (310). The driving module has a simple structure and a small size, and is convenient to assemble.

## Description

The present application claims priority to Chinese Patent Application No. 202311345382.7 filed with the China National Intellectual Property Administration on October 17, 2023 and entitled "Driving Module of Transport Vehicle and Transport Vehicle", which is incorporated herein by reference in its entirety.

### Technical Field

The present application relates to the technical field of transport vehicle, and in particular to a driving module for a transport vehicle and a transport vehicle.

### Background

An Automated Guided Vehicle (AGV) refers to a transport tool which is equipped with an automatic guidance device such as an electromagnetic or optical automatic guidance device, etc., is controlled by a computer, is capable of automatically traveling along a predetermined guidance path. It is widely used in factory handling, warehouse logistics, intelligent parking, port transportation, and other fields.

The automated guided vehicle is typically equipped with a driving module to drive the automated guided vehicle to travel. However, existing driving modules have complex structures, large volumes, and are not easy to assemble.

### Summary

The purpose of the embodiments of the present application is to provide a driving module for a transport vehicle and a transport vehicle, to solve the problems of complex structure, large volume, and difficulty in assembly of the driving module. The specific technical solutions are as follows.

An embodiment in a first aspect of the present application provides a driving module for a transport vehicle, the transport vehicle including a vehicle frame for carrying articles, the driving module including: a driving assembly, including motors and driving wheels, the motors being in transmission connection with the driving wheels, the driving assembly further including a frame, the motors being located within the frame and fixedly connected to the frame, the driving wheels being located outside the frame; a bracket, including a horizontal plate, the horizontal plate being installed on top of the frame; a slewing bearing, installed on top of the horizontal plate and including a bearing inner ring and a bearing outer ring, one of the bearing inner ring and the bearing outer ring being connected to the horizontal plate, and the other of the bearing inner ring and the bearing outer ring being configured to connect to the vehicle frame of the transport vehicle; a non-contact angle sensor assembly, including an annular angle ruler and a reader, the annular angle ruler being fixed to the bearing inner ring to connect with the horizontal plate, and the reader being fixed to the bearing outer ring; or, the annular angle ruler being fixed to the bearing outer ring to connect with the horizontal plate, and the reader being fixed to the bearing inner ring.

In some embodiments of the present application, the frame includes four side surfaces connected end to end, there are two motors and two driving wheels respectively, the two driving wheels are coaxially arranged and located on opposite sides outside the frame respectively; each of the two motors is connected to a corresponding one of the two driving wheels.

In some embodiments of the present application, the driving assembly further includes two speed reducers, each of the speed reducers includes an installation surface, installation surfaces of the two speed reducers form a first side surface and a second side surface of the frame which are opposite to each other; the motors are fixedly connected to the installation surfaces and are in transmission connection with the driving wheels through the speed reducers .

In some embodiments of the present application, the bracket further includes vertical plates connected to the horizontal plate; wherein the driving assembly further includes two side plates arranged opposite to each other, the two side plates forming a third side surface and a fourth side surface of the frame which are opposite to each other; wherein the side plates are hinged to the vertical plates, so that the frame can swing relative to the vertical plates, and the two driving wheels are located on two sides of a hinge axis of the side plates.

In some embodiments of the present application, the driving module further includes hinge shafts and pressuring plates, wherein the vertical plates are provided with first through holes, the side plates are provided with second through holes, the hinge shafts are inserted into the first through holes and the second through holes and is fixedly connected to the vertical plates through the pressuring plates.

In some embodiments of the present application, wear-resistant sleeves are installed in the second through holes, and the hinge shafts are in rotation cooperation with the wear-resistant sleeves.

In some embodiments of the present application, the horizontal plate is provided with floating limiting members which are located on top of the side plates; wherein when the frame swings relative to the vertical plates, ends of the floating limiting members close to the side plates are configured to abut against the top of the side plates to limit a swing range of the driving assembly relative to the vertical plates.

In some embodiments of the present application, the floating limiting members are first bolts, and the horizontal plate is provided with first installation holes, the first bolts being fixed in the first installation holes and extending out of the first installation holes in a direction close to the side plates; when the frame swings relative to the vertical plates, ends of the first bolts close to the side plates are configured to abut against the top of the side plates.

In some embodiments of the present application, a part of the bearing inner ring protrudes beyond the bearing outer ring in a direction close to the horizontal plate and is fixed on top of the horizontal plate, so that a gap exists between the bearing outer ring and the horizontal plate.

In some embodiments of the present application, a part of the bearing inner ring protrudes beyond the bearing outer ring in a direction away from the horizontal plate, and an installation groove is provided on a peripheral side of the bearing inner ring, the annular angle ruler being fixed in the installation groove and the reader being fixed on a side surface of the bearing outer ring facing away from the horizontal plate.

In some embodiments of the present application, a limiting groove is provided on a side of the bearing outer ring close to the horizontal plate, the limiting groove extending in a circumferential direction of the bearing outer ring; the horizontal plate is provided with a rotation limiting member, the rotation limiting member being at least partially accommodated in the limiting groove and being in stopping cooperation with side walls of the limiting groove.

In some embodiments of the present application, the rotation limiting member is a second bolt, and the horizontal plate is provided with a second installation hole, the second bolt being fixed in the second installation hole, and a head of the second bolt being accommodated in the limiting groove and being in stopping cooperation with the side walls of the limiting groove.

In some embodiments of the present application, the driving module further includes a wire protection plate which is installed on a side of the slewing bearing facing away from the bracket; wherein the horizontal plate is provided with a first wire passage hole, the wire protection plate is provided with a second wire passage hole, the second wire passage hole communicates with the first wire passage hole through the bearing inner ring, and a diameter of the second wire passage hole is less than or equal to a diameter of the bearing inner ring; wherein the motors are connected with a motor wire harness, and the motor wire harness passes through the first wire passage hole and the second wire passage hole and then connects to a driver of the transport vehicle.

In the embodiment of the present application, the driving module includes the driving assembly. The driving assembly includes the motors and the driving wheels. The transport vehicle can be driven to travel by rotation of the driving wheels. The driving assembly further includes the frame. By providing the frame, it facilitates fixing the motors and connecting with the bracket. The driving module further includes the slewing bearing, wherein one of the bearing inner ring and bearing outer ring of the slewing bearing is connected to the driving assembly through the bracket, and the other of the bearing inner ring and bearing outer ring can be connected to the vehicle frame of the transport vehicle. Thus, a rotational connection between the driving assembly and the vehicle frame of the transport vehicle can be achieved via the slewing bearing, which is beneficial for turning during travel of the transport vehicle. The driving module further includes the non-contact angle sensor assembly. The non-contact angle sensor assembly includes the annular angle ruler and the reader, wherein the annular angle ruler can be fixed to a part of the slewing bearing connected to the driving assembly, and the reader can be fixed to a part of the slewing bearing connected to the vehicle frame of the transport vehicle. Thus, during travel of the transport vehicle, the reader can remain fixed relative to the vehicle frame of the transport vehicle, and the annular angle ruler can rotate relative to the vehicle frame of the transport vehicle following the driving assembly. In a state where the reader is not in contact with the annular angle ruler, the reader can detect the rotation angle of the annular angle ruler, thereby measuring and feeding back the rotation angle of the driving module relative to the vehicle frame of the transport vehicle when the transport vehicle turns. The driving module of the embodiment of the present application has a simple structure, small volume, and is easy to assemble.

An embodiment in a second aspect of the present application provides a transport vehicle, including a vehicle frame and the driving module according to any embodiment in the first aspect. The driving module is installed on the vehicle frame. Since it has the driving module according to any embodiment in the first aspect, it also has the beneficial effects of any embodiment in the first aspect, which will not be repeated here in the present application.

Of course, implementing any product or method of the present application does not necessarily require achieving all the advantages mentioned above at the same time.

### Brief Description of the Drawings

The drawings described here are provided to further understand the present application and constitute a part of the present application. The schematic embodiments of the present application and their descriptions are used to explain the present application and do not constitute an improper limitation on the present application.
Figure 1 is a schematic structural diagram of a driving module according to an embodiment in a first aspect of the present application;
Figure 2 is a schematic exploded view of a driving assembly of the driving module shown in Figure 1;
Figure 3 is a schematic structural diagram of a non-contact angle sensor assembly of the driving module shown in Figure 1;
Figure 4a is a schematic structural diagram of a bracket of the driving module shown in Figure 1 from a perspective;
Figure 4b is a schematic structural diagram of the bracket of the driving module shown in Figure 1 from another perspective;
Figure 5a is a first state diagram of the driving module shown in Figure 1 on an uneven road surface;
Figure 5b is a second state diagram of the driving module shown in Figure 1 on an uneven road surface;
Figure 6a is a schematic structural diagram of a slewing bearing of the driving module shown in Figure 1 from a top view;
Figure 6b is a schematic structural diagram of the slewing bearing of the driving module shown in Figure 1 from a bottom view;
Figure 7a is a schematic state diagram of the driving module shown in Figure 1 at one rotation limit position;
Figure 7b is a schematic state diagram of the driving module shown in Figure 1 at another rotation limit position;
Figure 8 is a schematic assembly diagram of a vehicle frame of the transport vehicle and the driving module according to an embodiment in a second aspect of the present application.

In the Figures: driving module 10; driving assembly 100; motor 110; driving wheel 120; frame 130; first side surface 131; second side surface 132; third side surface 133; fourth side surface 134; speed reducer 140; installation surface 141; side plate 150; second through hole 151; wear-resistant sleeve 160; bracket 200; horizontal plate 210; first installation hole 211; second installation hole 212; first wire passage hole 213; vertical plate 220; first through hole 221; slewing bearing 300; bearing inner ring 310; installation groove 311; stop portion 312; bearing outer ring 320; limiting groove 321; side wall 322; non-contact angle sensor assembly 400; annular angle ruler 410; reader 420; sensor cable 421; hinge shaft 500; pressuring plate 510; rotation limiting member 520; floating limiting member 530; wire protection plate 600; second wire passage hole 610; vehicle frame 20; avoidance hole 201.

### Detailed Description

To make the objectives, technical solutions, and advantages of the present invention clearer and understandable, the present invention will be described in more detail below with reference to the accompanying drawings and embodiments. Obviously, the described embodiments are only some, and not all, of the embodiments of the present application. All other embodiments obtained based on the embodiments of the present application by those of ordinary skill in the art fall within the protection scope of the present invention.

As mentioned in the background art, in related technologies, the automated guided vehicle is usually equipped with a driving module to drive the automated guided vehicle to travel. However, existing driving modules have complex structures, large volumes, and are not easy to assemble.

In view of this, an embodiment in the first aspect of the present application proposes a driving module 10 for a transport vehicle. The transport vehicle includes a vehicle frame for carrying articles.

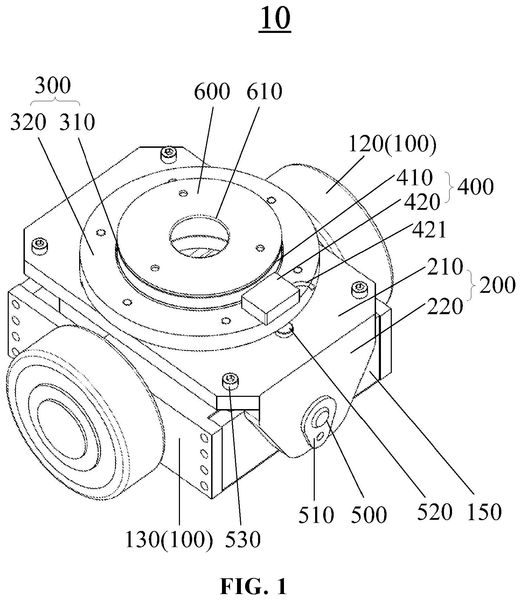

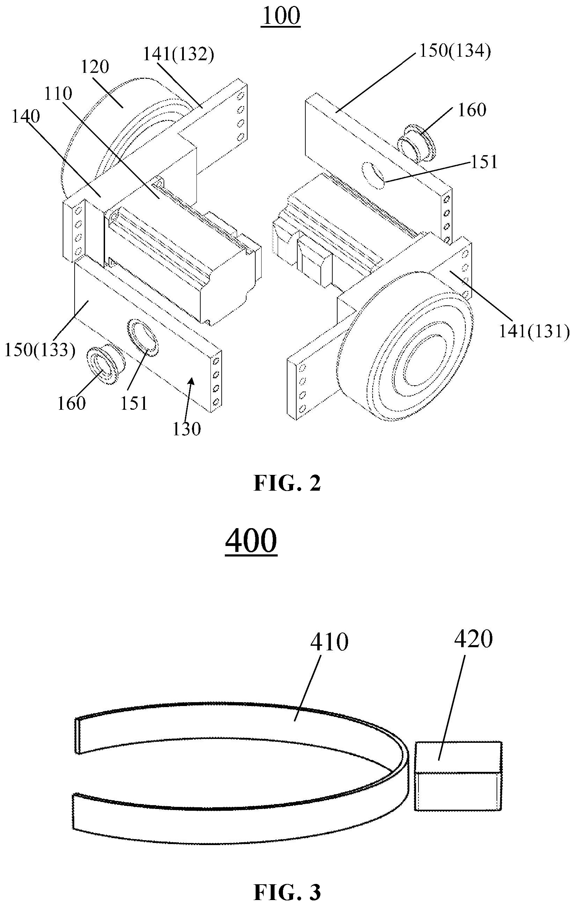

Refer to Figure 1 to Figure 3, wherein Figure 1 is a schematic structural diagram of the driving module 10 according to the embodiment in the first aspect of the present application; Figure 2 is a schematic exploded view of a driving assembly 100 of the driving module 10 shown in Figure 1; Figure 3 is a schematic structural diagram of a non-contact angle sensor assembly 400 of the driving module 10 shown in Figure 1.

As shown in Figure 1 to Figure 3, the driving module 10 includes a driving assembly 100, a bracket 200, a slewing bearing 300, and a non-contact angle sensor assembly 400. The driving assembly 100 includes motors 110 and driving wheels 120, wherein the motors 110 are in transmission connection with the driving wheels 120. The driving assembly 100 further includes a frame 130, wherein the motors 110 are located within the frame 130 and fixedly connected to the frame 130, and the driving wheels 120 are located outside the frame 130. The bracket 200 includes a horizontal plate 210 which is installed on top of the frame 130. The slewing bearing 300 is installed on top of the horizontal plate 210. The slewing bearing 300 includes a bearing inner ring 310 and a bearing outer ring 320. One of the bearing inner ring 310 and the bearing outer ring 320 is connected to the horizontal plate 210, and the other of the bearing inner ring 310 and the bearing outer ring 320 is configured to connect to the vehicle frame of the transport vehicle. The non-contact angle sensor assembly 400 includes an annular angle ruler 410 and a reader 420. The annular angle ruler 410 is fixed onto the bearing inner ring 310 to connect with the horizontal plate 210, and the reader 420 is fixed onto the bearing outer ring 320. Alternatively, the annular angle ruler 410 is fixed onto the bearing outer ring 320 to connect with the horizontal plate 210, and the reader 420 is fixed onto the bearing inner ring 310.

In the embodiment of the present application, the driving module 10 includes the driving assembly 100. The driving assembly 100 includes the motors 110 and the driving wheels 120. The transport vehicle can be driven to travel by rotation of the driving wheels 120. The driving assembly 100 further includes the frame 130. By providing the frame 130, it facilitates fixing the motors 110 and connecting with the bracket 200. The driving module 10 further includes the slewing bearing 300, wherein one of the bearing inner ring 310 and bearing outer ring 320 of the slewing bearing 300 is connected to the driving assembly 100 through the bracket 200, and the other of the bearing inner ring 310 and bearing outer ring 320 can be connected to the vehicle frame of the transport vehicle. Thus, a rotational connection between the driving assembly 100 and the vehicle frame of the transport vehicle can be achieved via the slewing bearing 300, which is beneficial for turning during travel of the transport vehicle. The driving module 10 further includes the non-contact angle sensor assembly 400. The non-contact angle sensor assembly 400 includes the annular angle ruler 410 and the reader 420, wherein the annular angle ruler 410 can be fixed to a part of the slewing bearing 300 connected to the driving assembly 100, and the reader 420 can be fixed to a part of the slewing bearing 300 connected to the vehicle frame of the transport vehicle. Thus, during travel of the transport vehicle, the reader 420 can remain fixed relative to the vehicle frame of the transport vehicle, and the annular angle ruler 410 can rotate relative to the vehicle frame of the transport vehicle following the driving assembly 100. In a state where the reader 420 is not in contact with the annular angle ruler 410, the reader 420 can detect the rotation angle of the annular angle ruler 410, thereby measuring and feeding back the rotation angle of the driving module 10 relative to the vehicle frame of the transport vehicle when the transport vehicle turns. The driving module 10 of the embodiment of the present application has a simple structure, small volume, and is easy to assemble.

It can be understood that rolling elements are arranged between the bearing inner ring 310 and the bearing outer ring 320. The rolling elements can be balls, rollers, etc. The rolling elements enable relative rotation between the bearing inner ring 310 and the bearing outer ring 320.

As shown in Figure 2, the frame 130 includes four side surfaces connected end to end. Specifically, the frame 130 has a rectangular structure. The frame 130 can include a first side surface 131, a second side surface 132, a third side surface 133, and a fourth side surface 134. The first side surface 131 and the second side surface 132 are arranged opposite to each other, and the third side surface 133 and the fourth side surface 134 are arranged opposite to each other.

There are two motors 110 and two driving wheels 120, respectively. The two driving wheels 120 are coaxially arranged and located on opposite sides outside the frame 130 respectively. Each of the two motors 110 is connected to a corresponding one of the two driving wheels 120. Thus, each of the two motors 110 can drive the corresponding driving wheel 120 to rotate, which can improve the driving capability of the driving module 10.

During use, the two motors 110 can drive the two driving wheels 120 in a differential drive manner. During differential travel of the two driving wheels 120, the two driving wheels 120 can enable the turning and direction change of the driving assembly 100.

Preferably, as shown in Figure 1 and Figure 3, axes of the two driving wheels 120 are collinear with one centerline of the frame 130, and an axis of the slewing bearing 300 passes through a center point of the frame 130. Thus, the driving wheels 120 can provide relatively balanced supporting force for the driving module 10, improving the travel stability of the driving module 10.

As shown in Figure 2, the driving assembly 100 can further include speed reducers 140. There are two speed reducers 140. The two motors 110 are in transmission connection with the driving wheels 120 through the speed reducers 140 respectively. Each of the speed reducer 140 includes an installation surface 141. The installation surfaces 141 of the two speed reducers 140 can form the first side surface 131 and second side surface 132 of the frame 130 opposite to each other. The motors 110 are enabled to connect to the frame 130 by being fixed to the installation surfaces 141.

The driving assembly 100 can further include two side plates 150 arranged opposite to each other. Two ends of each of the two side plates 150 are connected to the two speed reducers 140 respectively. The two side plates 150 form the third side surface 133 and the fourth side surface 134 of the frame 130 opposite to each other. By providing the side plates 150 and utilizing the installation surfaces 141 of the two speed reducers 140, the four side surfaces of the frame 130 connected end to end can be formed. Thus, the structure of the frame 130 is relatively simple and has high stability.

In a specific embodiment, both ends of each of the side plates 150 are provided with threaded holes, and both ends of each of the installation surfaces 141 of the speed reducers 140 are also provided with threaded holes. The side plates 150 can be fixedly connected with the adjacent installation surfaces 141 of the speed reducers 140 by threaded fasteners.

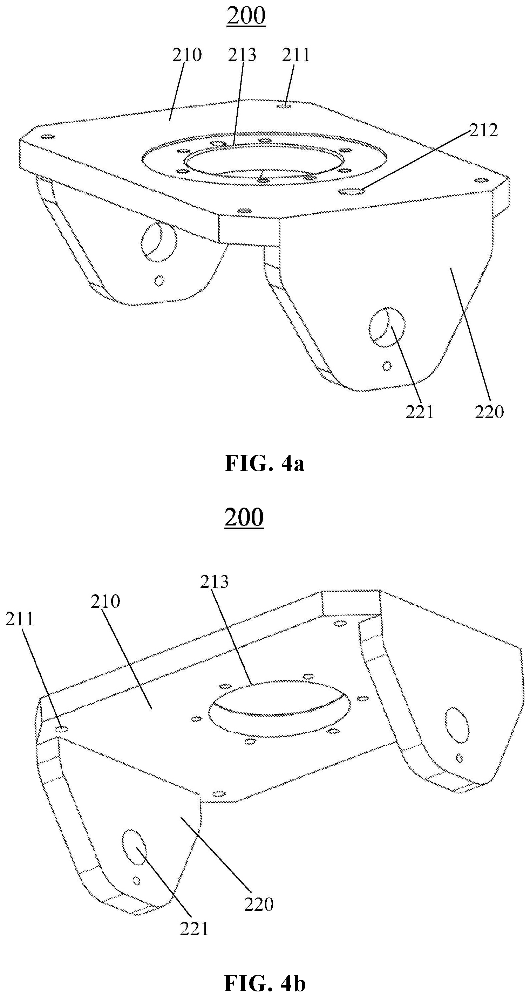

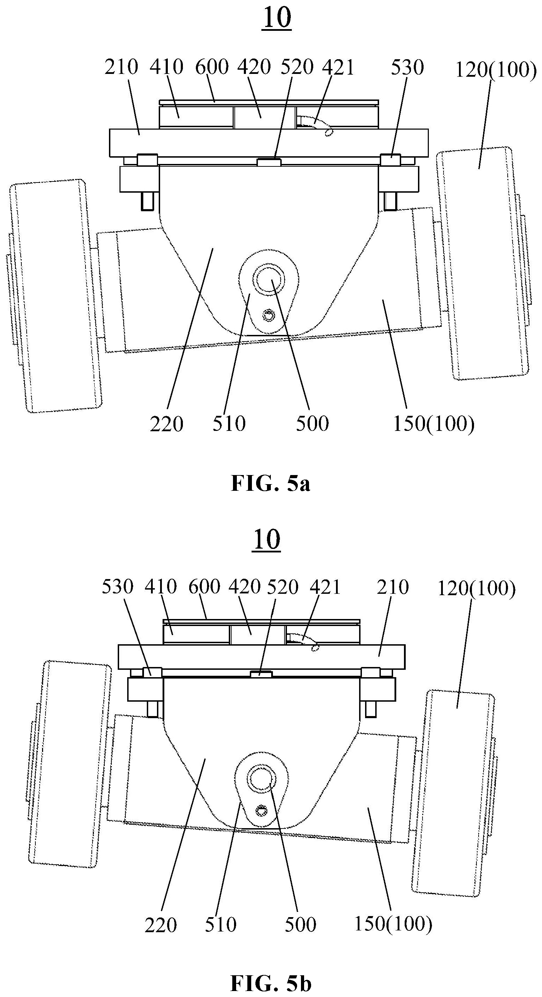

Refer to Figure 4a to Figure 5b, wherein Figure 4a is a schematic structural diagram of the bracket 200 of the driving module 10 shown in Figure 1 from a perspective; Figure 4b is a schematic structural diagram of the bracket 200 of the driving module 10 shown in Figure 1 from another perspective; Figure 5a is a first state diagram of the driving module 10 shown in Figure 1 on an uneven road surface; Figure 5b is a second state diagram of the driving module 10 shown in Figure 1 on an uneven road surface.

As shown in Figure 4a and Figure 4b, the bracket 200 further includes vertical plates 220. There are two vertical plates 220 connected to opposite sides of the horizontal plate 210.

As shown in Figure 5a and Figure 5b, the two side plates 150 are hinged to the two vertical plates 220 respectively, so that the frame 130 can swing relative to the vertical plates 220. The two driving wheels 120 are located on two sides of a hinge axis of the side plates 150. By providing the vertical plates 220, it facilitates connection of the bracket 200 with the frame 130 of the driving assembly 100. By hinging the vertical plates 220 to the side plates 150 to enable the driving assembly 100 to swing relative to the vertical plates 220 when the transport vehicle travels on an uneven road surface, it can prevent the driving wheels 120 from being suspended, achieving better adaptation to the uneven road surface.

Further, in the embodiment of the present application, the two driving wheels 120 can be symmetrically arranged about the hinge axis of the side plates 150. Thus, on an uneven road surface, the two driving wheels 120 can provide more balanced supporting force for the driving module 10, making the stability of the driving module 10 better.

Specifically, as shown in Figure 4a to Figure 5b, the vertical plates 220 are provided with first through holes 221. As shown in Figure 2, the side plates 150 are provided with second through holes 151. As shown in Figure 5a and Figure 5b, the driving module 10 further includes hinge shafts 500 and pressing plates 510. The vertical plates 220 are located outside the frame 130. The hinge shafts 500 are inserted into the first through holes 221 and the second through holes 151 and is fixedly connected to the vertical plates 220 through the pressing plates 510. By providing the hinge shafts 500, the hinge connection of the vertical plates 220 with the side plates 150 can be achieved. By providing the pressing plates 510, if facilitates fixing the hinge shafts 500 to the vertical plates 220, preventing the hinge shafts 500 from detaching. Specifically, the pressing plates 510 can be fixedly connected to the hinge shafts 500, and the pressing plates 510 are provided with threaded holes. After the hinge shafts 500 are inserted into the first through holes 221 and the second through holes 151 in sequence, the pressing plates 510 can be fixed onto the vertical plates 220 by threaded fasteners.

Preferably, as shown in Figure 2, wear-resistant sleeves 160 can be installed in the second through holes 151. The hinge shafts 500 can be in rotation cooperation with the wear-resistant sleeves 160. The wear-resistant sleeves 160 can be in an interference fit with the second through holes 151. The wear-resistant sleeves 160 are made of wear-resistant material. Thus, it can prevent the hinge shafts 500 from directly wearing the second through holes 151, which is beneficial for extending the service life of the side plates 150. In a specific embodiment, the wear-resistant sleeves 160 can be copper sleeves.

It should be noted that, in the embodiment of the present application, since the side plates 150 are hinged onto the vertical plates 220 and can rotate relative to the vertical plates 220, the side plates 150 can also be called rotary base plates.

In other embodiments of the present application, the vertical plates 220 can be located inside the frame 130. After the hinge shafts 500 are inserted into the second through holes 151 and the first through holes 221 in sequence, the pressing plates 510 can be fixed onto the side plates 150 by threaded fasteners. The present application does not limit the fixing method and position of the pressing plates 510, as long as the hinge connection between the vertical plates 220 and the side plates 150 can be ensured.

Further, as shown in Figure 5a and Figure 5b, the horizontal plate 210 is provided with floating limiting members 530. The floating limiting members 530 are located on top of the side plates 150. When the frame 130 swings relative to the vertical plates 220, ends of the floating limiting members 530 close to the side plates 150 are configured to abut against the top of the side plates 150 to limit the swing range of the driving assembly 100 relative to the vertical plates 220. Thus, it can avoid the phenomenon of interference with other components due to an excessive floating range of the driving assembly 100, which is beneficial for the stable operation of the driving module 10.

Specifically, the floating limiting members 530 can be first bolts. As shown in Figure 4a to Figure 5b, the horizontal plate 210 is provided with first installation holes 211. The first bolts are fixed in the first installation holes 211 and extend out of the first installation holes 211 in a direction close to the side plates 150. When the frame 130 swings relative to the vertical plates 220, the ends of the first bolts close to the side plates 150 are configured to abut against the top of the side plates 150. Thus, the structure of the floating limiting members 530 is simple and easy to install.

As shown in Figure 1, four floating limiting members 530 can be provided. The four floating limiting members 530 can be installed at four corners of the horizontal plate 210. Thus, the floating range of the driving assembly 100 can be better limited.

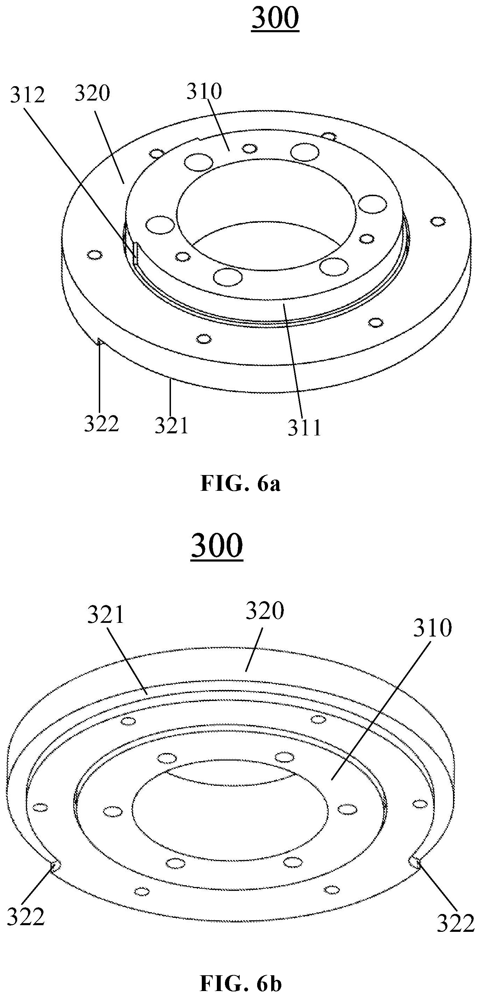

Refer to Figure 6a and Figure 6b. Figure 6a is a schematic structural diagram of the slewing bearing 300 of the driving module 10 shown in Figure 1 from a top view. Figure 6b is a schematic structural diagram of the slewing bearing 300 of the driving module 10 shown in Figure 1 from a bottom view.

As shown in Figure 6a and Figure 6b, in the axial direction of the slewing bearing 300, both sides of the bearing inner ring 310 protrude beyond the bearing outer ring 320.

Specifically, as can be seen from Figure 1, Figure 4a, Figure 4b, Figure 6a, and Figure 6b, a part of the bearing inner ring 310 protrudes beyond the bearing outer ring 320 along a direction close to the horizontal plate 210 and is fixed on top of the horizontal plate 210, so that a gap exists between the bearing outer ring 320 and the horizontal plate 210. Since the bearing inner ring 310 is fixedly connected to the horizontal plate 210 and the gap exists between the bearing outer ring 320 and the horizontal plate 210, when the driving assembly 100 turns, the bearing inner ring 310 can rotate relative to the bearing outer ring 320 following the horizontal plate 210. Thus, after the bearing outer ring 320 is connected to the vehicle frame of the transport vehicle, the horizontal plate 210 can rotate relative to the vehicle frame of the transport vehicle, thereby achieving a rotational connection between the driving assembly 100 and the vehicle frame of the transport vehicle.

In a specific embodiment, the bearing inner ring 310 can be fixedly connected to the horizontal plate 210 by threaded fasteners.

Further, a limiting groove 321 is provided on a side of the bearing outer ring 320 close to the horizontal plate 210. The limiting groove 321 extends in the circumferential direction of the bearing outer ring 320. Two side walls 322 of the limiting groove 321 in the circumferential direction constitute limiting portions. The horizontal plate 210 is provided with a rotation limiting member 520 which is at least partially accommodated in the limiting groove 321 and is in stopping cooperation with the side walls 322 of the limiting groove 321.

Specifically, the rotation limiting member 520 can be a second bolt, and the horizontal plate 210 is provided with a second installation hole 212, wherein the second bolt is fixed in the second installation hole 212, and a head of the second bolt is accommodated in the limiting groove 321 and is in stopping cooperation with the side walls 322 of the limiting groove 321. Thus, the rotation limiting member 520 has a relatively simple structure and is easy to connect with the horizontal plate 210.

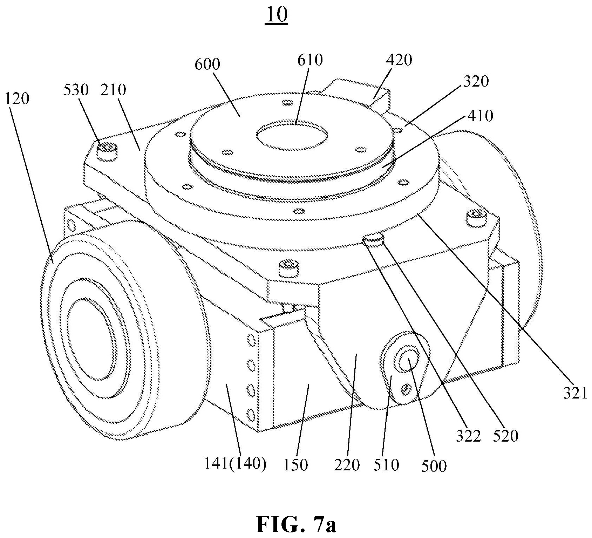

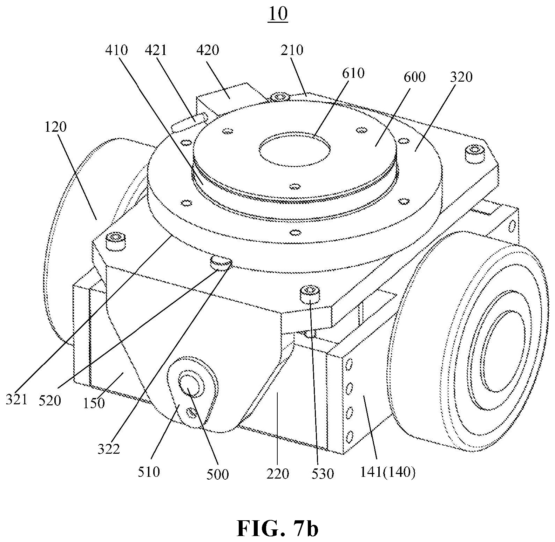

Refer to Figure 7a and Figure 7b. Figure 7a is a schematic state diagram of the driving module 10 shown in Figure 1 at one rotation limit position. Figure 7b is a schematic state diagram of the driving module 10 shown in Figure 1 at another rotation limit position.

As shown in Figure 7a and Figure 7b, by providing the limiting groove 321 and the rotation limiting member 520, when the bearing inner ring 310 rotates relative to the bearing outer ring 320 following the horizontal plate 210, the rotation range of the bearing inner ring 310 relative to the bearing outer ring 320 can be limited. Specifically, when the rotation limiting member 520 abuts against the side wall 322 of the limiting groove 321 in a clockwise direction, the bearing inner ring 310 rotates relative to the bearing outer ring 320 to a first limit position. When the rotation limiting member 520 abuts against the other side wall 322 of the limiting groove 321 in a counterclockwise direction, the bearing inner ring 310 rotates relative to the bearing outer ring 320 to a second limit position. By limiting the rotation angle of the bearing inner ring 310 relative to the bearing outer ring 320, the rotation angle of the driving assembly 100 relative to the vehicle frame of the transport vehicle can be further limited, avoiding situations such as motor wire harnesses being twisted and broken due to unlimited rotation of the driving assembly 100.

In other embodiments of the present application, the rotation limiting member 520 may also be a protrusion provided on a side of the horizontal plate 210 close to the bearing outer ring 320. The protrusion is accommodated in the limiting groove 321 and is in stopping cooperation with the side walls of the limiting groove 321. The present application does not limit the structure of the rotation limiting member 520, as long as it can achieve rotation limiting for the horizontal plate 210 and the bearing outer ring 320.

As shown in Figure 1 and Figure 6a, a part of the bearing inner ring 310 protrudes beyond the bearing outer ring 320 in a direction away from the horizontal plate 210, and an installation groove 311 is provided on the outer peripheral side of the bearing inner ring 310. The annular angle ruler 410 is fixed in the installation groove 311. The reader 420 is fixed on a side surface of the bearing outer ring 320 facing away from the horizontal plate 210. Since the bearing inner ring 310 is fixedly connected to the horizontal plate 210 and the bearing outer ring 320 is fixedly connected to the vehicle frame of the transport vehicle, when the driving assembly 100 turns, the reader 420 can remain fixed relative to the vehicle frame of the transport vehicle, and the annular angle ruler 410 can rotate relative to the reader 420 following the bearing inner ring 310. The reader 420 can measure and feedback the rotation angle of the driving module 10 relative to the vehicle frame of the transport vehicle by detecting the rotation angle of the annular angle ruler 410.

It should be noted that, in the embodiment of the present application, since the bearing inner ring 310 and the bearing outer ring 320 rotate relative to each other within a certain range, the annular angle ruler 410 does not need to be a complete ring structure, but rather an arc-shaped structure with a central angle slightly larger than that of the rotation limiting groove 321, as shown in Figure 3. As shown in Figure 6a, the installation groove 311 is not a complete ring groove, but an arc-shaped groove. The installation groove 311 terminates at a stop portion 312 in the circumferential direction. The stop portion 312 is a stepped surface formed between the outer peripheral surface of the bearing inner ring 310 and the circumferential side wall surface of the installation groove 311. The central angle of the installation groove 311 is slightly larger than that of the annular angle ruler 410, so that the annular angle ruler 410 can be completely accommodated in the installation groove 311. Thus, it can ensure that the reader 420 can receive a signal from the annular angle ruler 410 when the bearing inner ring 310 rotates relative to the bearing outer ring 320 to the two limit positions, while also saving material and reducing cost.

It should be noted that, in the embodiment of the present application, since both sides of the bearing inner ring 310 protrude beyond the bearing outer ring 320 in the axial direction of the slewing bearing 300, and the bearing inner ring 310 is provided with the installation groove 311 and the bearing outer ring 320 is provided with the limiting groove 321, the structure of the slewing bearing 300 is different from that of conventional bearings. The slewing bearing 300 can also be called a special-shaped axial bearing.

As shown in Figure 1, the non-contact angle sensor assembly 400 can further include a sensor cable 421. The sensor cable 421 is provided at the reader 420. The sensor cable 421 is used for connecting to a driver of the transport vehicle. During travel of the transport vehicle, since the reader 420 remains fixed relative to the vehicle frame of the transport vehicle and does not rotate with the driving assembly 100, the sensor cable 421 can also remain relatively fixed relative to the vehicle frame of the transport vehicle. Thus, the sensor cable 421 is less likely to be damaged.

In a specific embodiment, the non-contact angle sensor assembly 400 can be an optical angle sensor assembly. The optical angle sensor assembly is a sensor that converts mechanical geometric displacement on a rotating shaft into a pulse or digital quantity through photoelectric conversion. Specifically, when the non-contact angle sensor assembly 400 is the optical angle sensor assembly, the annular angle ruler 410 is provided with a grating, and a photoelectric detection device is provided in the reader 420. When the bearing inner ring 310 rotates relative to the bearing outer ring 320, the annular angle ruler 410 can rotate with the bearing inner ring 310, and the reader 420 can detect and output several pulse signals based on the photoelectric conversion principle, thereby obtaining information about the rotation angle of the annular angle ruler 410.

In another specific embodiment, the non-contact angle sensor assembly 400 can be a magnetic angle sensor assembly, wherein the annular angle ruler 410 is a magnet, and an integrated circuit is provided in the reader 420. The integrated circuit has a microprocessor. The integrated circuit determines amplitudes of two orthogonal components of the magnetic field emitted by the magnet and transmits the amplitudes to the microprocessor. The microprocessor can use computer algorithms such as Coordinate Rotation Digital Computer (CORDIC ) or an arctangent algorithm to determine the angular position.

The present application does not limit the type and operating principle of the non-contact angle sensor assembly 400, as long as the measurement of the rotation angle of the annular angle ruler 410 can be achieved without contact between the annular angle ruler 410 and the reader 420.

In addition, it should be noted that, compared with a contact angle sensor assembly, the non-contact angle sensor assembly 400 used in the embodiment of the present application has the advantages of simple structure and easy to assembly.

Specifically, some contact angle sensor assemblies can include a code disk and an electrical brush. The code disk is a disk-shaped printed circuit board formed by creating a certain code pattern on a copper foil board using the process of manufacturing printed circuit boards. The electrical brush is a movable contact structure. When the code disk rotates, a certain digital code output of a certain code system may be generated at the contact between the electrical brush and the code disk. Since the code disk includes multiple concentric and radially arranged code tracks, and each code track is provided with one corresponding electrical brush, the installation of the code disk and electrical brush is relatively complex, and the volume of the code disk and electrical brush is large.

In addition, some contact angle sensor assemblies may not include a code disk and an electrical brush, but instead have gears machined on the peripheral side of the slewing bearing, and also have gears machined on the housing of the sensor. When the slewing bearing rotates, the sensor remains fixed, and the gears on the slewing bearing may drive the gears on the sensor housing. By detecting the driven gears, the rotation angle of the slewing bearing can be obtained. Since gears need to be machined on the slewing bearing and the sensor housing, and the gears of slewing bearing and the gears of the sensor housing need to mesh, the slewing bearing and the sensor have a relatively complex structure, a large volume, and is not easy to install.

Compared with the above two types of contact angle sensor assemblies, the reader 420 and the annular angle ruler 410 in the non-contact angle sensor assembly 400 used in the driving module 10 in the embodiment of the present application can measure and feedback the rotation angle of the driving module 10 without contact between the reader 420 and the annular angle ruler 410. This not only makes the structure of the reader 420 and the annular angle ruler 410 simple, but also helps to simplify the installation cooperation of the reader 420 and the annular angle ruler 410 with other components, thereby facilitating reduction of the structural complexity of the entire driving module 10, so that the driving module 10 has the advantages of simple structure, small volume, and easy to assembly.

In other embodiments of the present application, the bearing outer ring 320 can also be fixedly connected to the horizontal plate 210, and the bearing inner ring 310 can be fixedly connected to the vehicle frame of the transport vehicle. Thus, when the driving assembly 100 turns, the bearing outer ring 320 can rotate relative to the bearing inner ring 310 following the horizontal plate 210, thereby achieving rotation of the horizontal plate 210 relative to the vehicle frame of the transport vehicle, and further achieving a rotational connection between the driving assembly 100 and the vehicle frame of the transport vehicle. Further, the reader 420 can be fixed to the bearing inner ring 310, and the annular angle ruler 410 can be fixed on the peripheral side of the bearing outer ring 320.

As shown in Figure 1, Figure 7a, and Figure 7b, in the embodiment of the present application, the driving module 10 further includes a wire protection plate 600. The wire protection plate 600 is installed on a side of the slewing bearing 300 facing away from the bracket 200. The horizontal plate 210 is provided with a first wire passage hole 213 as shown in Figure 4a, and the wire protection plate 600 is provided with a second wire passage hole 610 as shown in Figure 7a. The second wire passage hole 610 communicates with the first wire passage hole 213 through the bearing inner ring 310, and a diameter of the second wire passage hole 610 is less than or equal to a diameter of the bearing inner ring 310. The motors 110 is connected with a motor wire harness. The motor wire harness passes through the first wire passage hole 213 and the second wire passage hole 610 and then may be connected to a driver of the transport vehicle.

In the embodiment of the present application, by providing the first wire passage hole 213, it is convenient for the motor wire harness to pass through the first wire passage hole 213 and the bearing inner ring 310 and then connect to the driver of the transport vehicle. Considering that, in actual use, the motor wire harness may rub against the bearing inner ring 310, and prolonged rubbing may cause damage or even breakage of the motor wire harness since the bearing inner ring 310 is made of metal material, then in the embodiment of the present application, the driving module 10 is further provided with the wire protection plate 600 which is provided with the second wire passage hole 610, with the diameter of the second wire passage hole 610 being less than or equal to the diameter of the bearing inner ring 310. Thus, after connecting the motor wire harness to the driver of the transport vehicle, the rubbing between the motor wire harness and the bearing inner ring 310 can be improved, thereby facilitating improving the situation of damage or even breakage of the motor wire harness.

Further, after passing through the second wire passage hole 610, the motor wire harness can be fixed on the wire protection plate 600. Thus, it can prevent the motor wire harness from shaking, enabling more stable installation of the motor wire harness.

An embodiment in a second aspect of the present application provides a transport vehicle, including a vehicle frame and the driving module according to any embodiment in the first aspect. The driving module is installed on the vehicle frame.

The transport vehicle of the embodiment of the present application includes the driving module 10. The driving module 10 includes the driving assembly 100, and the driving assembly 100 includes the motors 110 and the driving wheels 120. The transport vehicle can be driven to travel by rotation of the driving wheels 120. The driving assembly 100 further includes the frame 130. By providing the frame 130, it facilitates fixing the motors 110 and connecting with the bracket 200. The driving module 10 further includes the slewing bearing 300, wherein one of the bearing inner ring 310 and the bearing outer ring 320 of the slewing bearing 300 is connected to the driving assembly 100 through the bracket 200, and the other of the bearing inner ring 310 and the bearing outer ring 320 can be connected to the vehicle frame of the transport vehicle. Thus, a rotational connection between the driving assembly 100 and the vehicle frame of the transport vehicle can be achieved by the slewing bearing 300, which is beneficial for turning during travel of the transport vehicle. The driving module 10 further includes the non-contact angle sensor assembly 400 which includes the annular angle ruler 410 and the reader 420, wherein the annular angle ruler 410 can be fixed to a part of the slewing bearing 300 connected with the driving assembly 100, and the reader 420 can be fixed to a part of the slewing bearing 300 connected with the vehicle frame of the transport vehicle. Thus, during travel of the transport vehicle, the reader 420 can remain fixed relative to the vehicle frame of the transport vehicle, and the annular angle ruler 410 can rotate relative to the vehicle frame of the transport vehicle following the driving assembly 100. In a state where the reader 420 is not in contact with the annular angle ruler 410, the reader 420 can detect the rotation angle of the annular angle ruler 410, thereby measuring and feeding back the rotation angle of the driving module 10 relative to the vehicle frame of the transport vehicle when the transport vehicle turns. The driving module 10 in the embodiment of the present application has a simple structure and thus a small volume, and is easy to assemble.

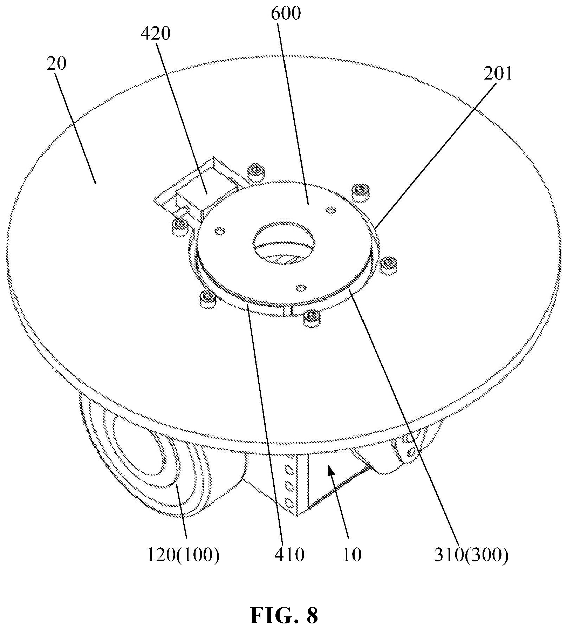

Refer to Figure 8. Figure 8 is a schematic assembly diagram of the vehicle frame 20 of the transport vehicle and the driving module 10 according to an embodiment in the second aspect of the present application.

As shown in Figure 8, the vehicle frame 20 is provided with an avoidance hole 201. During assembly, the bearing inner ring 310 of the slewing bearing 300 in the driving module 10 can pass through the avoidance hole 201, and the bearing outer ring 320 can be fixedly connected to the vehicle frame 20 by a threaded fastener. Thus, a rotational connection between the vehicle frame 20 and the driving module 10 can be achieved.

It should be noted that, in the present document, relational terms such as first and second are only used to distinguish one entity or operation from another entity or operation, and do not necessarily require or imply any such actual relationship or order between these entities or operations. Moreover, the terms "comprise", "include", or any other variations thereof are intended to cover non-exclusive inclusion, so that a process, method, article, or device that includes a series of elements includes not only those elements, but also other elements not explicitly listed, or elements inherent to such process, method, article, or device. Without further limitation, an element defined by the phrase "comprising a..." does not exclude the presence of additional identical elements in the process, method, article, or device that includes the element.

The various embodiments in the present specification are described in a related manner, and identical or similar parts between the various embodiments can be referred to each other. Each embodiment focuses on explaining differences from other embodiments. In particular, for system embodiments, since they are basically similar to method embodiments, the description is relatively simple. For relevant parts, please refer to the description in the method embodiments.

The above descriptions are only preferred embodiments of the present invention and are not intended to limit the present invention. Any modifications, equivalent replacements, improvements, etc., made within the spirit and principles of the present invention shall be included within the protection scope of the present invention.

## Claims

1. A driving module for a transport vehicle, the transport vehicle comprising a vehicle frame (20) for carrying articles, the driving module (10) comprising:
a driving assembly (100), comprising motors (110) and driving wheels (120), the motors (110) being in transmission connection with the driving wheels (120); the driving assembly (100) further comprising a frame (130), the motors (110) being located within the frame (130) and fixedly connected to the frame (130), the driving wheels (120) being located outside the frame (130);
a bracket (200), comprising a horizontal plate (210), the horizontal plate (210) being installed on top of the frame (130);
a slewing bearing (300), installed on top of the horizontal plate (210) and comprising a bearing inner ring (310) and a bearing outer ring (320), one of the bearing inner ring (310) and the bearing outer ring (320) being connected to the horizontal plate (210), and the other of the bearing inner ring (310) and the bearing outer ring (320) being configured to connect to the vehicle frame (20) of the transport vehicle;
a non-contact angle sensor assembly (400), comprising an annular angle ruler (410) and a reader (420), the annular angle ruler (410) being fixed to the bearing inner ring (310) to connect with the horizontal plate (210), and the reader (420) being fixed to the bearing outer ring (320); or, the annular angle ruler (410) being fixed to the bearing outer ring (320) to connect with the horizontal plate (210), and the reader (420) being fixed to the bearing inner ring (310).

2. The driving module according to claim 1, wherein the frame (130) comprises four side surfaces connected end to end, there are two motors (110) and two driving wheels (120) respectively, the two driving wheels (120) are coaxially arranged and located on opposite sides outside the frame (130) respectively; each of the two motors (110) is connected to a corresponding one of the two driving wheels (120).

3. The driving module according to claim 2, wherein the driving assembly (100) further comprises two speed reducers (140), each of the speed reducers (140) comprises an installation surface (141), installation surfaces (141) of the two speed reducers (140) form a first side surface (131) and a second side surface (132) of the frame (130) which are opposite to each other; the motors (110) are fixedly connected to the installation surfaces (141) and are in transmission connection with the driving wheels (120) through the speed reducers (140).

4. The driving module according to claim 2, wherein the bracket (200) further comprises vertical plates (220) connected to the horizontal plate (210);
wherein the driving assembly (100) further comprises two side plates (150) arranged opposite to each other, the two side plates (150) forming a third side surface (133) and a fourth side surface (134) of the frame (130) which are opposite to each other;
wherein the side plates (150) are hinged to the vertical plates (220), so that the frame (130) can swing relative to the vertical plates (220), and the two driving wheels (120) are located on two sides of a hinge axis of the side plates (150).

5. The driving module according to claim 4, wherein the driving module (10) further comprises hinge shafts (500) and pressuring plates (510), wherein the vertical plates (220) are provided with first through holes (221), the side plates (150) are provided with second through holes (151), the hinge shafts (500) are inserted into the first through holes (221) and the second through holes (151) and are fixedly connected to the vertical plates (220) through the pressuring plates (510).

6. The driving module according to claim 5, wherein wear-resistant sleeves (160) are installed in the second through holes (151), and the hinge shafts (500) are in rotation cooperation with the wear-resistant sleeves (160).

7. The driving module according to claim 4, wherein the horizontal plate (210) is provided with floating limiting members (530) which are located on top of the side plates (150); wherein when the frame (130) swings relative to the vertical plates (220), ends of the floating limiting members (530) close to the side plates (150) are configured to abut against the top of the side plates (150) to limit a swing range of the driving assembly (100) relative to the vertical plates (220).

8. The driving module according to claim 7, wherein the floating limiting members (530) are first bolts, and the horizontal plate (210) is provided with first installation holes (211), the first bolts being fixed in the first installation holes (211) and extending out of the first installation holes (211) in a direction close to the side plates (150); when the frame (130) swings relative to the vertical plates (220), ends of the first bolts close to the side plates (150) are configured to abut against the top of the side plates (150).

9. The driving module according to claim 1, wherein a part of the bearing inner ring (310) protrudes beyond the bearing outer ring (320) in a direction close to the horizontal plate (210) and is fixed on top of the horizontal plate (210), so that a gap exists between the bearing outer ring (320) and the horizontal plate (210).

10. The driving module according to claim 9, wherein a part of the bearing inner ring (310) protrudes beyond the bearing outer ring (320) in a direction away from the horizontal plate (210), and an installation groove (311) is provided on a peripheral side of the bearing inner ring (310), the annular angle ruler (410) being fixed in the installation groove (311), and the reader (420) being fixed on a side surface of the bearing outer ring (320) facing away from the horizontal plate (210).

11. The driving module according to claim 9, wherein a limiting groove (321) is provided on a side of the bearing outer ring (320) close to the horizontal plate (210), the limiting groove (321) extending in a circumferential direction of the bearing outer ring (320); the horizontal plate (210) is provided with a rotation limiting member (520), the rotation limiting member (520) being at least partially accommodated in the limiting groove (321) and being in stopping cooperation with side walls (322) of the limiting groove (321).

12. The driving module according to claim 11, wherein the rotation limiting member (520) is a second bolt, and the horizontal plate (210) is provided with a second installation hole (212), the second bolt being fixed in the second installation hole (212), and a head of the second bolt being accommodated in the limiting groove (321) and being in stopping cooperation with the side walls (322) of the limiting groove (321).

13. The driving module according to claim 1, wherein the driving module (10) further comprises a wire protection plate (600) which is installed on a side of the slewing bearing (300) facing away from the bracket (200);
wherein the horizontal plate (210) is provided with a first wire passage hole (213), the wire protection plate (600) is provided with a second wire passage hole (610), the second wire passage hole (610) communicates with the first wire passage hole (213) through the bearing inner ring (310), and a diameter of the second wire passage hole (610) is less than or equal to a diameter of the bearing inner ring (310); wherein the motors (110) are connected with a motor wire harness, and the motor wire harness passes through the first wire passage hole (213) and the second wire passage hole (610) and then connects to a driver of the transport vehicle.

14. A transport vehicle, comprising:
a vehicle frame (20);
the driving module (10) according to any one of claims 1-13, the driving module (10) being installed on the vehicle frame (20).
